# EUROPEAN PATENT SPECIFICATION

(11) **EP 1 647 388 B1**
(45) Date of publication and mention of the grant of the patent: **02.04.2008**
(21) Application number: 05109641.0
(22) Date of filing: 17.10.2005
(51) Int. Cl.: B29C 45/54, B29C 45/53, B29C 45/47

(54) **Apparatus for the injection of plastic materials**
Vorrichtung zum Spritzgiessen von Kunstoffmaterialen
Dispositif pour l'injection de matières plastiques

(30) Priority: 18.10.2004 IT MI20041976
(43) Date of publication of application: 19.04.2006
(73) Proprietor: Ferioli Filippo S.p.A., 21055 Gorla Minore (IT)
(72) Inventor: Rossi, Albino, 21055 Gorla Minore (IT)
(74) Representative: Jorio, Paolo

(56) References cited:
- FR-A- 901 731
- US-A- 5 863 567

## Description

The present invention relates to an apparatus for the injection of plastic materials, in particular for the injection of a component of a complex product.

Generally, a complex product is defined as a product comprising at least two materials, which are reciprocally united and are defined by plastic materials having different colours and/or different mechanical characteristics in order to meet the determined aesthetic and/or structural requisites required of the product. One technique for producing these components provided for pressing a semi-worked piece formed only from the first material using a press, and injecting onto this first material a second material using the technique of injection moulding. For this purpose, an apparatus for injection is used, comprising a conveyor adapted to fluidise the plastic material, an injection cylinder for injecting the plastic material in fluid state into a mould contiguous to the semi-worked piece and a conduit to transfer the plastic material in fluid state from the screw conveyor to the injection cylinder. Generally, this apparatus is coupled to the press used for making the semi-worked piece and must be capable of assuming various positions with respect to the press. For this purpose it is important for the apparatuses for injection to be as lightweight as possible, of small size and easy to operate.

The apparatuses for injection of known type do not fully meet the needs for ease of handling required by their purpose. In fact, the injection cylinder is operated by a hydraulic cylinder which consequently requires a pump, an oil reservoir and relative rigid pipes to be arranged on the apparatus, which obstructs the movements of the apparatus for injection, while the operation of the fluidizing conveyor is carried out using an electric motor fixed to the apparatus itself.

To overcome the above-identified problem, US 5,863,567 discloses an injection apparatus comprising a reversible electric motor for driving the screw conveyor and the injection cylinder via a ratchet mechanism, and a variable speed electric motor for driving and controlling the injection cylinder together with the reversible electric motor.

Another solution is disclosed in FR 901,731, according to which an injection apparatus comprises several screw conveyors operated by a single motor and by a gear train, wherein at least one gear is axially slideable.

It is the object of the present invention to provide an apparatus for the injection of plastic materials, in particular for the injection of a component of a complex product capable of avoiding the drawbacks of the known art.

According to the present invention, there is provided an apparatus for the injection of plastic materials; the apparatus comprising a screw conveyor for feeding and fluidizing the plastic material, an injection cylinder inside which there is arranged a piston for injecting the plastic material in the fluid state, a conduit for transferring the fluid plastic material from the screw conveyor to the injection cylinder and a power assembly for driving the screw conveyor and the piston; the power assembly comprising a single power unit for driving the screw conveyor and the piston; mechanical transmission components for selectively operating said screw conveyor and said piston; whereby said mechanical transmission components comprise a first and a second clutches for coupling respectively said power unit to the screw conveyor and the piston; characterized in that said clutches are friction clutches.

For better understanding of the present invention, it will now be described a preferred embodiment thereof, by way of pure non-limitative example, and with reference to the accompanying drawings, in which:
- figure 1 is an elevational side view, with parts in section and with parts removed for clarity, of the apparatus for injection subject of the present invention;

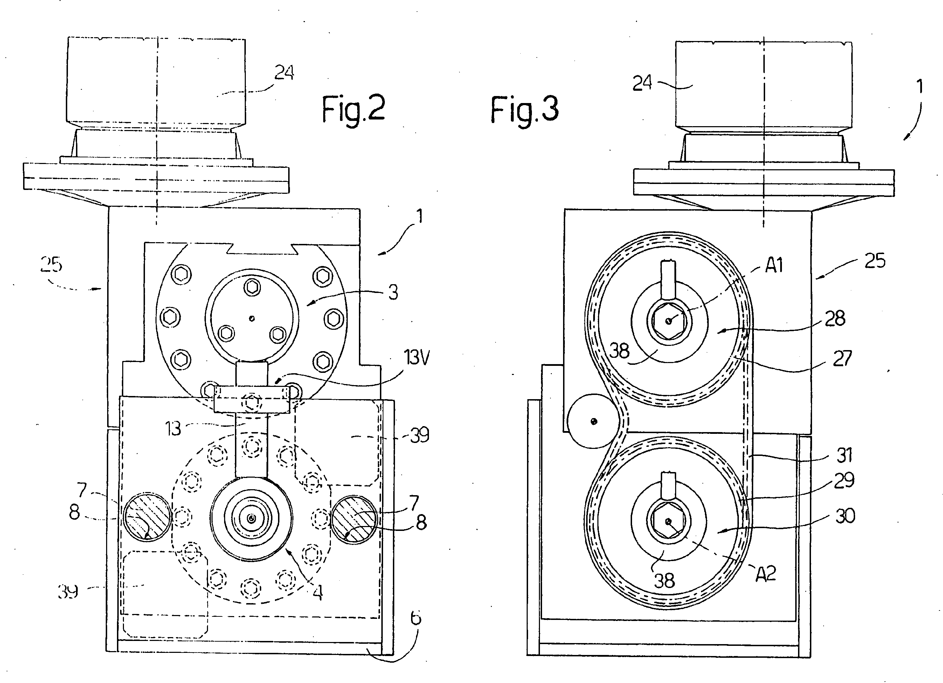

- figure 2 is an elevational front view, with parts removed for clarity, of the apparatus in figure 1; and
- figure 3 is a rear elevational view, with parts removed for clarity, of the apparatus in figure 1.

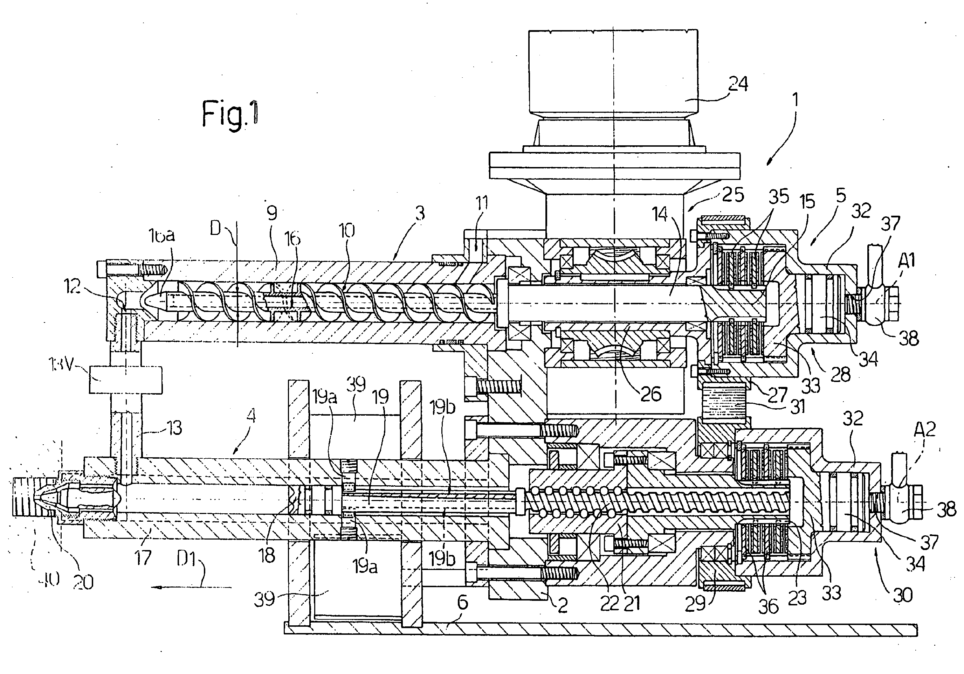

In figure 1, it is indicated by 1 as a whole an apparatus for injection suitable for being fitted onto a moulding press. The apparatus for injection 1 extends mainly in a direction D1 and comprises a mounting plate 2, a screw conveyor 3 for fluidizing the plastic material, an injection cylinder 4, and a power assembly 5. The plate 2 supports the screw conveyor 3, the cylinder 4 and the power assembly 5, and is mounted in a sliding manner with respect to a frame 6 by interposing bars 7 fixed to the plate 2 and sliding in the direction D1 within guides 8 fixed to the frame 6. The screw conveyor 3 and the injection cylinder 4 present respective axes A1 and A2 parallel to direction D1 and are arranged side-by-side. The screw conveyor 3 comprises a cylinder 9 fixed to the mounting plate 2 and a rotatable screw 10 inside the cylinder 9. The cylinder 9 presents a feeding inlet port 11 arranged on the cylindrical face through which the plastic material in granules is fed and an outlet port 12, also positioned on the cylindrical face, but on the opposite side to the inlet port 11. The outlet port 12 is connected to the injection cylinder 4 by a conduit 13 for transferring the plastic material in fluid state from the screw conveyor 3 to the injection cylinder 4. Along the conduit 13 there is a check valve 13V to allow the transfer of the plastic material only from the screw conveyor 3 to the cylinder 4. In effect, the screw 10 is the front of a shaft 14 which extends along axis A1 and presents on the side opposite the screw 10 an axially splined end 15. The screw 10 is made of a helix which, in combination with the shaft 14, of diameter D, defines a helical path for feeding the plastic material and fluidising the plastic material, in a known manner and using electric resistances not shown in the accompanying figures. At the helix, the shaft 14 is hollow. In other words, in the screw 10 there has been made a non-passing hole 16 closed by an end plug 16a. From a construction standpoint, in order to accomodate the length of the screw conveyor 3 and, at the same time, define a helical path sufficiently long to allow the fluidisation of the plastic material in a satisfactory manner, the diameter D has been designed to be relatively large. However, this theoretical approach would not be satisfactory if the hole 16 were not made in order to reduce the dimensions of the shaft 14 and, therefore, the thermal conductivity of the latter. For this purpose, it is necessary to consider that cold plastic material is introduced through the inlet port 11 and gradually warmed by the cylinder 9. Therefore, along the cylinder 9 there are zones at different temperatures. According to experiments carried out by the applicant, the hole 16, in other words the reduction in the mass of the shaft 14, reduces the thermal exchange between the zones on the shaft 14 at different temperatures at the screw 10.

The injection cylinder 4 presents an external casing 17 within which a piston 18 moves. The piston 18 is connected to a rod 19 for expelling the plastic material from an injection outlet 20 provided with a spring-loaded shutter nozzle preventing leakage of the plastic material during transfer from the cylinder 9 to the cylinder 4. The piston 18 and the rod 19 are aligned with axis A2 and are activated by a nut and screw mechanism in which the nut 21 rotates about axis A2, while the screw 22 is fixed to the rod 19 and is only capable of translating along axis A2 in direction D1. Two pins 19a are fixed along the casing 17 positioned radially with respect to axis A2 and extending towards the rod 19 in order to engage two relative channels 19b made in the rod 19 itself. In this manner, the rod 19, the piston 18 and the screw 22 are prevented from rotating.

The power assembly 5 comprises an electric motor 24 and in sequence a reduction unit 25 which transmits the movement to a sleeve 26 rotating about axis A1. The sleeve 26 is fixed to a pulley 27, which is coaxial to the shaft 14 and fixed to a pneumatic friction clutch 28 suitable for selectively coupling the pulley 27 to the shaft 14, in other words to the screw 10. The power assembly 5 includes a further pulley 29, which is rotatable about axis A2 around the nut 21 and is fixed to a friction clutch 30 suitable for selectively coupling the pulley 29 with the nut 21. The pulleys 27 and 29 are coupled one another by a belt 31. Each friction clutch 28 and 30 includes a cup-shaped body 32 fixed to the respective pulley 27, 29.

The cup-shaped body 32 houses a pressure plate 33 axially moveable under the action of a pneumatic cylinder 34, two friction clutch discs 35 slidingly mounted on the splined end 15/23 of the shaft 14/of the nut 21, and two friction clutch discs 36 slidingly mounted on the internal channelled surface of the cup-shaped body 32. The cylinder 34 is operated by compressed air fed through a hole 37 coupled to the supply system by a rotating coupling 38 and the compressed air is introduced by means of solenoid valves not illustrated in the accompanying drawings.

The apparatus 1 is selectively moveable in the direction D1 by means of two pneumatic actuators 39 arranged between the frame 6 and the injection cylinder 4. By means of said actuators 39 the apparatus is moved away from and towards an injection mould 40.

In use, the plastic material in granules is fed through the inlet 11 and is fluidized along the helical feeding path of the screw conveyor 3 to be transferred through the conduit 13 to the injection cylinder 4. The screw conveyor 3, the cylinder 4 and the conduit 13 are heated, in known manner and by means of electric resistances not shown in the accompanying drawings, in order to fluidize the plastic material and to maintain it in a fluid state. At this stage, the shaft 14 is rotated in order to feed the plastic material and the friction clutch 28 is coupled. At this stage, the injection outlet 20 is closed and the plastic material flowing inside the cylinder 4 determines the movement from left to right of the piston 18 (in figure 1) and, consequently, of the rod 19 and the screw 22. The nut 21 must rotate freely and the friction clutch 30 is not coupled. When a predetermined quantity of plastic material to be injected has been transferred from the cylinder 4 and controlled using an electronic transducer (not shown), the friction clutch 28 is uncoupled and the friction clutch 30 is coupled to advance the screw 22, the rod 19 and the piston 18. At this subsequent stage, the non-return valve 13v prevents the fluidized plastic material from being conveyed through the conduit 13 and the injection outlet 20 is opened thanks to the pressure exerted against the mould 40 and the fluidized material is injected into the mould 40.

In the accompanying drawings reference is made to an embodiment in which only two clutch discs 35 and two clutch discs 36 are shown, however the number of clutch discs 35 and 36 will vary according to the power to be transmitted and the size of the apparatus 1. For low power a single disc 35 and no disc 36 is sufficient. Moreover, the pneumatically controlled friction clutches 28 and 30 allow the variation of pressure exerted on the disc 35 or on the clutch discs 35 and 36 by means of an electronic pressure transducer (not shown), so as to allow a compensation effect during injection. In other words, the compensation effect is as follows: once the mould has been filled with plastic material, the latter begins to solidify and to reduce in volume. Therefore, in order to avoid the formation of bubbles and cavities in the injected plastic material, the piston 18 is held pressed against the plastic material to exert a pressure capable of injecting small quantities of plastic material for compensating the reduction in mass caused by the solidification. At this stage, the displacement of the piston 18 is negligible, in fact the stroke can be considered concluded before injection of the compensation masses.

This effect is known, but it is easily achieved in the apparatus 1 reducing the pressure on the pressure plate 33 of the friction clutch 30 once the piston 18 has completed its stroke.

Apart from the increased ease of handling of the apparatus 1, mainly due to the compact dimensions of the apparatus 1 itself and the presence of a single power unit 24, the friction clutches 28 and 30 also present the advantage of avoiding excessive stress on the parts of the apparatus 1 in the case of jamming, safeguarding the apparatus 1 itself.

## Claims

1. An apparatus for the injection of plastic materials; the apparatus comprising a screw conveyor (3) for feeding and fluidizing the plastic material, an injection cylinder (4) inside which there is arranged a piston (18) for injecting the plastic material in the fluid state, a conduit (13) for transferring the fluid plastic material from the screw conveyor (3) to the injection cylinder (4) and a power assembly (5) for driving the screw conveyor (3) and the piston (4); the power assembly (5) comprising a single power unit (24) for driving the screw conveyor (3) and the piston (18); mechanical transmission components for selectively operating said screw conveyor (3) and said piston (18); whereby said mechanical transmission components comprise a first and a second clutches (28, 30) for coupling respectively said power unit (24) to the screw conveyor (3) and the piston (18), **characterized in that** said clutches are friction clutches.

2. An apparatus according to claim 1, **characterized in that** each of said first and second friction clutches (28, 30) include at least one disc (35; 35, 36).

3. An apparatus according to claim 1 or 2, **characterized in that** each of said first and second clutches (28, 30) is controlled by a respective pneumatic cylinder (34).

4. An apparatus according to claim 2 or 3, **characterized in that** said mechanical transmission components comprise a first and a second pulleys (27, 29) rotating about a first and a second axis (A1, A2) parallel to each other.

5. An apparatus according to claim 4, **characterized in that** said screw conveyor (3) comprises a screw (10) rotating along the first axis (A1); the first friction clutch (28) being adapted to directly couple the first pulley (27) to said screw (10).

6. An apparatus according to claim 4 or 5, **characterized in that** said piston (18) is coupled to a screw (22) designed to translate along the second axis (A2) and coupled to a nut (21) adapted to rotate about said second axis (A2); the second friction clutch (29) being adapted to directly couple the nut (21) to the second pulley (27) .

7. An apparatus according to any one of the previous claims from 4 to 6, **characterized in that** said mechanical transmission components comprise a belt (31) arranged around the first and the second pulleys (27, 29).

8. An apparatus according to any one of the previous claims, **characterized in that** said power unit (24) is an electric motor.

9. An apparatus according to any one of the previous claims, **characterized in that** the screw conveyor (3) presents a screw (10) provided with a non-passing hole (16).

10. An apparatus according to claim 9, **characterized by** comprising a plug (16a) for closing the open end of said non-passing hole (16).

## Patentansprüche

1. Vorrichtung zum Spritzgießen von Kunststoffmaterialien, die Folgendes aufweist: einen Schraubenförderer (3) zum Zuführen und Fluidisieren des Kunststoffmaterials, einen Einspritzzylinder (4), in dem ein Kolben (18) zum Einspritzen des Kunststoffmaterials im fluiden Zustand angeordnet ist; eine Leitung (13) zum Transferieren des fluiden Kunststoffmaterials vom Schraubenförderer (3) zum Einspritzzylinder (4); und eine Antriebsanordnung (5) zum Antreiben des Schraubenförderers (3) und des Einspritzzylinders (4), wobei die Antriebsanordnung (5) eine einzelne Antriebseinheit (24) zum Antreiben des Schraubenförderers (3) und des Kolbens (18) aufweist; mechanische Übertragungskomponenten zum selektiven Betreiben des Schraubenförderers (3) und des Kolbens (18), wobei diese mechanischen Übertragungskomponenten eine erste und eine zweite Kupplung (28, 30) zum jeweiligen Ankuppeln der Antriebseinheit (24) an den Schraubenförderer (3) und den Kolben (18) aufweisen, **dadurch gekennzeichnet, dass** die Kupplungen Reibungskupplungen sind.

2. Vorrichtung nach Anspruch 1, **dadurch gekennzeichnet, dass** betreffend die erste und die zweite Reibungskupplung (28, 30) jede mindestens eine Scheibe (35; 35, 36) aufweist.

3. Vorrichtung nach Anspruch 1 oder 2, **dadurch gekennzeichnet, dass** betreffend die erste und die zweite Kupplung (28, 30) jede durch einen jeweiligen Pneumatikzylinder (34) gesteuert wird.

4. Vorrichtung nach Anspruch 2 oder 3, **dadurch gekennzeichnet, dass** die mechanischen Übertragungskomponenten eine erste und eine zweite Riemenscheibe (27, 29) aufweisen, die sich um eine erste und eine zweite Achse (A1, A2), die parallel zueinander verlaufen, drehen.

5. Vorrichtung nach Anspruch 4, **dadurch gekennzeichnet, dass** der Schraubenförderer (3) eine sich entlang einer ersten Achse (A1) drehende Schraube (10) aufweist; wobei die erste Reibungskupplung (28) so ausgebildet ist, dass sie die Riemenscheibe (24) direkt an die Schraube (10) kuppelt.

6. Vorrichtung nach Anspruch 4 oder 5, **dadurch gekennzeichnet, dass** der Kolben (18) mit einer Schraube (22) verbunden ist, die so konzipiert ist, dass sie eine Translation entlang der zweiten Achse (A2) ausführt und er mit einer Mutter (21) verbunden ist, die so angeordnet ist, dass sie sich um die zweite Achse (A2) dreht; wobei die zweite Reibungskupplung (29) so ausgebildet ist, dass sie direkt die Mutter (21) an die zweite Riemenscheibe (27) kuppelt.

7. Vorrichtung nach einem der vorstehenden Ansprüche 4 bis 6, **dadurch gekennzeichnet, dass** die mechanischen Übertragungskomponenten einen Riemen (31) aufweisen, der um die erste und die zweite Riemenscheibe (27, 29) herum angeordnet ist.

8. Vorrichtung nach einem der vorstehenden Ansprüche, **dadurch gekennzeichnet, dass** die Antriebseinheit (24) ein Elektromotor ist.

9. Vorrichtung nach einem der vorstehenden Ansprüche, **dadurch gekennzeichnet, dass** der Schraubenförderer (3) eine Schraube (10) aufweist, die mit einem nicht durchgehenden Loch. (16) versehen ist.

10. Vorrichtung nach Anspruch 9, **gekennzeichnet durch** einen Stopfen (16a) zum Schließen des offenen Endes des nicht durchgehenden Lochs (16).

## Revendications

1. Appareil destiné à l'injection de matériaux plastiques ; l'appareil comprenant un transporteur à vis (3) pour acheminer et fluidifier le matériau plastique, un cylindre d'injection (4) à l'intérieur duquel est aménagé un piston (18) pour injecter le matériau plastique à l'état fluide, un conduit (13) pour transférer le matériau plastique fluide du transporteur à vis (3) au cylindre d'injection (4) et un ensemble moteur (5) pour entraîner le transporteur à vis (3) et le piston (4) ; l'ensemble moteur (5) comprenant une seule unité motrice (24) pour entraîner le transporteur à vis (3) et le piston (18) ; des composants de transmission mécaniques destinés à faire fonctionner sélectivement ledit transporteur à vis (3) et ledit piston (18) ; dans lequel lesdits composants de transmission mécaniques comprennent un premier et un second embrayages (28, 30) pour coupler respectivement ladite unité motrice (24) au transporteur à vis (3) et au piston (18), **caractérisé en ce que** lesdits embrayages sont des embrayages à friction.

2. Appareil selon la revendication 1, **caractérisé en ce que** lesdits premier et second embrayages à friction (28, 30) comprennent au moins un disque (35 ; 35, 36).

3. Appareil selon la revendication 1 ou 2, **caractérisé en ce que** lesdits premier et second embrayages (28, 30) sont commandés par un cylindre pneumatique respectif (34).

4. Appareil selon la revendication 2 ou 3, **caractérisé en ce que** lesdits composants de transmission mécaniques comprennent une première et une seconde poulies (27, 29) tournant autour d'un premier et d'un second axe (A1, A2) parallèlement l'un à l'autre.

5. Appareil selon la revendication 4, **caractérisé en ce que** ledit transporteur à vis (3) comprend une vis (10) tournant le long du premier axe (A1) ; le premier embrayage à friction (28) étant adapté pour coupler directement la première poulie (27) à ladite vis (10).

6. Appareil selon la revendication 4 ou 5, **caractérisé en ce que** ledit piston (18) est couplé à une vis (22) qui est conçue pour effectuer un mouvement de translation le long du second axe (A2) et qui est couplée à un écrou (21) adapté pour tourner autour dudit second axe (A2) ; le second embrayage à friction (29) étant adapté pour coupler directement l'écrou (21) à la seconde poulie (27).

7. Appareil selon l'une quelconque des revendications précédentes 4 à 6, **caractérisé en ce que** lesdits composants de transmission mécaniques comprennent une courroie (31) qui est aménagée autour de la première et de la seconde poulies (27, 29).

8. Appareil selon l'une quelconque des revendications précédentes, **caractérisé en ce que** ladite seule unité motrice (24) est un moteur électrique.

9. Appareil selon l'une quelconque des revendications précédentes, **caractérisé en ce que** le transporteur à vis (3) présente une vis (10) qui est pourvue d'un trou non traversant (16).

10. Appareil selon la revendication 9, **caractérisé en qu'**il comprend un obturateur (16a) pour fermer l'extrémité ouverte dudit trou non traversant (16).
